# EUROPEAN PATENT APPLICATION

(11) **EP 4 404 153 A1**
(43) Date of publication of application: **24.07.2024**
(21) Application number: 23219909.1
(22) Date of filing: 22.12.2023
(51) Int. Cl.: G06V 20/59

(54) **TARGET OBJECT POSITIONING METHOD AND APPARATUS, COMPUTER DEVICE, AND STORAGE MEDIUM**

(30) Priority: 19.01.2023 CN 202310101372
(71) Applicant: Nio Technology (Anhui) Co., Ltd, Hefei City, Anhui 230601 (CN)
(72) Inventor: Zhang, Dingyong, Hefei City, 230601 (CN)
(74) Representative: Patentanwaltskanzlei Matschnig & Forsthuber OG

(57) **Abstract**

The disclosure provides a target object positioning method and apparatus, a computer device, and a storage medium. The method includes: respectively obtaining object recognition results corresponding to a plurality of sensors in a vehicle; and determining, based on a preset association relationship between object recognition results and a positioning result, a positioning result matching the object recognition results, where the positioning result includes presence of a target object in the vehicle and a seat position of the target object; and the target object includes an object wearing an extended reality device. This solution allows the positioning result to be provided more directly and quickly. Accordingly, a desired screen projection object of a user can be more accurately determined based on the positioning result.

## Description

### TECHNICAL FIELD

The disclosure relates to the field of intelligent vehicle technologies, and in particular, to a target object positioning method and apparatus, a computer device, a storage medium, and a computer program product.

### BACKGROUND

With the development of intelligent vehicles, extended reality technologies (XR, including augmented reality, virtual reality, mixed reality, etc.) are applied to vehicles, which greatly enriches the interactive functions of vehicles. When a user wearing an extended reality device (such as XR glasses) interacts with a vehicle (such as via voice or a UI), the user prefers a picture corresponding to interactive content to be displayed on an extended reality sensor. However, a vehicle controller is not sure whether the user is wearing an extended reality sensor and then may display the above picture on a center console screen. In view of this, accurate positioning of the user in the vehicle that is wearing the extended reality sensor is needed.

### SUMMARY

In view of this, it is necessary to provide a target object positioning method and apparatus, a computer device, a computer-readable storage medium, and a computer program product, in order to address the above technical problems.

In a first aspect, the disclosure provides a target object positioning method. The method is applied to a vehicle controller, and includes:
respectively obtaining object recognition results corresponding to a plurality of sensors in a vehicle; and
determining, based on a preset association relationship between object recognition results and a positioning result, a positioning result matching the object recognition results, where the positioning result includes presence of a target object in the vehicle and a seat position of the target object; and the target object includes an object wearing an extended reality device.

In a possible implementation, each of the plurality of sensors is set with a corresponding priority; the positioning result includes unrecognizable, and the obtaining object recognition results corresponding to a plurality of sensors in a vehicle includes:
obtaining an object recognition result from a corresponding first-priority sensor; and
after the determining, based on a preset association relationship between object recognition results and a positioning result, a positioning result matching the object recognition result data, the method further includes:
   when the recognition result indicates unrecognizable, obtaining an object recognition result from a corresponding second-priority sensor;
   merging the object recognition result from the corresponding first-priority sensor and the object recognition result from the corresponding second-priority sensor, to obtain a merged object recognition result; and
   determining, based on a preset association relationship between object recognition results and a positioning result, a positioning result matching the merged object recognition result.

In a possible implementation, the respectively obtaining object recognition results corresponding to a plurality of sensors in a vehicle includes:
respectively obtaining collected data corresponding to the plurality of sensors in the vehicle; and
processing the collected data according to an object recognition algorithm matching each of the plurality of sensors, to obtain a corresponding object recognition result.

In a possible implementation, the preset association relationship further includes an association relationship between the object recognition results and a positioning rule; and the determining, based on a preset association relationship between object recognition results and a positioning result, a positioning result matching the object recognition results includes:
determining, based on a preset association relationship between object recognition results and a positioning rule, a positioning rule matching the object recognition results; and
determining a positioning result based on the object recognition results and the positioning rule.

In a possible implementation, the method further includes:
when the positioning result is that there is a target object in the vehicle, in response to an interactive operation of the target object, displaying, on the extended reality device, a response picture matching the interactive operation.

In a possible implementation, the positioning result further includes absence of a target object in the vehicle; and the method further includes:
when the positioning result is that there is no target object in the vehicle, in response to an interactive operation of an in-vehicle object, displaying, on a display screen of the vehicle, a response picture matching the interactive operation.

In a possible implementation, the sensor includes at least one of the following:
an extended reality sensor, a seat sensor, an image sensor, and a sound sensor.

In a second aspect, the disclosure further provides a target object positioning apparatus. The apparatus includes:
an obtaining module configured to respectively obtain object recognition results corresponding to a plurality of sensors in a vehicle; and
a positioning module configured to determine, based on a preset association relationship between object recognition results and a positioning result, a positioning result matching the object recognition results, where the positioning result includes presence of a target object in the vehicle and a seat position of the target object; and the target object includes an object wearing an extended reality device.

In a possible implementation, each of the plurality of sensors is set with a corresponding priority; the positioning result includes unrecognizable, and the obtaining module includes:
a first obtaining sub-module configured to obtain an object recognition result from a corresponding first-priority sensor; and
a second obtaining sub-module configured to, when the recognition result indicates unrecognizable, obtain an object recognition result from a corresponding second-priority sensor; and
the positioning module further includes:
   a merging sub-module configured to merge the object recognition result from the corresponding first-priority sensor and the object recognition result from the corresponding second-priority sensor, to obtain a merged object recognition result; and
   a first determination sub-module configured to determine, based on a preset association relationship between object recognition results and a positioning result, a positioning result matching the merged object recognition result.

In a possible implementation, the obtaining module includes:
a third obtaining sub-module configured to respectively obtain collected data corresponding to the plurality of sensors in the vehicle; and
a processing sub-module configured to process the collected data according to an object recognition algorithm matching each of the plurality of sensors, to obtain a corresponding object recognition result.

In a possible implementation, the preset association relationship further includes an association relationship between the object recognition results and a positioning rule; and the positioning module includes:
a second determination sub-module configured to determine, based on a preset association relationship between object recognition results and a positioning rule, a positioning rule matching the object recognition results; and
a third determination sub-module configured to determine a positioning result based on the object recognition results and the positioning rule.

In a possible implementation, the apparatus further includes:
a first display module configured to, when the positioning result is that there is a target object in the vehicle, in response to an interactive operation of the target object, display, on the extended reality device, a response picture matching the interactive operation.

In a possible implementation, the positioning result further includes absence of a target object in the vehicle; and the apparatus further includes:
a second display module configured to, when the positioning result is that there is no target object in the vehicle, in response to an interactive operation of an in-vehicle object, display, on a display screen of the vehicle, a response picture matching the interactive operation.

In a possible implementation, the sensor includes at least one of the following:
an extended reality sensor, a seat sensor, an image sensor, and a sound sensor.

In a third aspect, the disclosure further provides a computer device. The computer device includes a memory and a processor. The memory stores a computer program. When the computer program is executed by the processor, the target object positioning method according to any one of the embodiments of the disclosure is implemented.

In a fourth aspect, the disclosure further provides a computer-readable storage medium. The computer-readable storage medium has a computer program stored thereon. When the computer program is executed by a processor, the target object positioning method according to any one of the embodiments of the disclosure is implemented.

In a fifth aspect, the disclosure further provides a computer program product. The computer program product includes a computer program. When the computer program is executed by a processor, the target object positioning method according to any one of the embodiments of the disclosure is implemented.

In the above target object positioning method and apparatus, computer device, storage medium, and computer program product, the association relationship between the object recognition results from the plurality of sensors and the positioning result is established, which solution can provide an improved accuracy of target object recognition and positioning than the use of a single sensor for target object recognition, and can provide the positioning result more directly and quickly than the solution in which the positioning accuracy of target object positioning is improved by increasing the complexity in a positioning algorithm for a single sensor. Accordingly, a desired screen projection object of a user can be more accurately determined based on the positioning result.

### BRIEF DESCRIPTION OF DRAWINGS

FIG. 1 is a diagram of an application environment of a target object positioning method according to one embodiment;
FIG. 2 is a first schematic flowchart of a target object positioning method according to one embodiment;
FIG. 3 is a second schematic flowchart of a target object positioning method according to another embodiment;
FIG. 4 is a structural block diagram of a target object positioning apparatus according to one embodiment;
FIG. 5 is a diagram of an internal structure of a vehicle controller according to one embodiment; and
FIG. 6 is a diagram of an internal structure of a computer device according to one embodiment.

### DESCRIPTION OF EMBODIMENTS

In order to make the objective, technical solutions, and advantages of the disclosure clearer, the disclosure is further described in detail below with reference to the accompanying drawings and the embodiments. It should be understood that the specific embodiments described herein are merely used to explain the disclosure and are not intended to limit the disclosure.

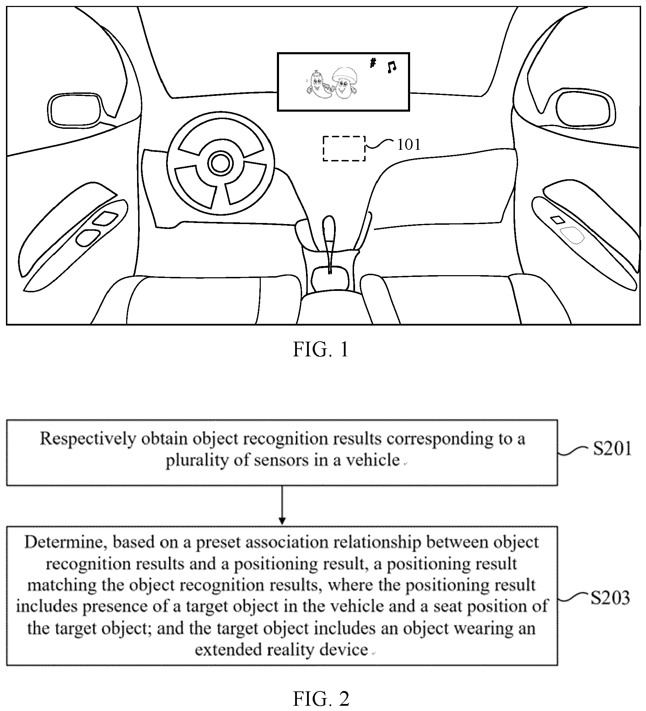

A target object positioning method provided in the embodiments of the disclosure may be applied in an application environment as shown in FIG. 1. A vehicle includes a vehicle controller 101, and a plurality of sensors, such as a vehicle-mounted camera, a vehicle-mounted microphone, a seat sensor and an extended reality sensor. The extended reality sensor is located on an extended reality device, where the extended reality device may include extended reality glasses, a bracelet, a watch, or other wearable devices. The vehicle controller is connected to the plurality of sensors over a network.

In one embodiment, as shown in FIG. 2, a target object positioning method is provided. By taking the application of the method to the vehicle controller of FIG. 1 as an example for description, the method includes the steps as follows.

Step S201: Separately obtain object recognition results corresponding to a plurality of sensors in a vehicle.

Specifically, the plurality of sensors in the vehicle may include a plurality of vehicle-mounted sensors, for example: a vehicle-mounted camera, a vehicle-mounted microphone, a seat sensor, an extended reality sensor, etc. Some of the sensors have a single function. For example, the seat sensor is used to detect whether there is an object on a corresponding seat. Some of the sensors have diverse functions. For example, by photographing an in-vehicle image and performing algorithm processing on the in-vehicle image with a preset task, the vehicle-mounted camera obtains recognition results that may include whether an in-vehicle object is wearing glasses, falling asleep, not wearing a seat belt, etc. However, in the disclosure, only the recognition result corresponding to the wearing of the extended reality device is selected. In the embodiments of the disclosure, the object may include a passenger or other preset objects. The target object includes an object wearing an extended reality device.

Step S203. Determine, based on a preset association relationship between object recognition results and a positioning result, a positioning result matching the object recognition results. The positioning result includes presence of a target object in the vehicle and a seat position of the target object; and the target object includes an object wearing an extended reality device.

Specifically, in the embodiments of the present disclosure, the association relationship between the object recognition results from the sensors and the positioning result is established in advance, such that the positioning result may be determined based on the types of the sensors and the corresponding object recognition results. In an exemplary embodiment, the positioning result includes the presence of the target object in the vehicle and the seat position of the target object. In an exemplary embodiment, a proximity sensor of the extended reality glasses detects that an object is using the extended reality glasses, and therefore, the object recognition result from the extended reality glasses includes: 1 object is using the extended reality glasses. Another sensor, such as a seat sensor, detects that an object is sitting in a seat, and therefore, the object recognition result from the seat sensor includes: 1 object is sitting in a seat. In a preset association relationship, the positioning result matching the above object recognition results from the sensors includes: there is a target object in the vehicle, and the target object is located at the position detected by the seat sensor. In another exemplary embodiment, the object recognition result from the extended reality glasses includes: 1 object is using the extended reality glasses. An object recognition result from another sensor, such as the seat sensor, includes: two objects are detected to sit in seats. Still another sensor, such as a vehicle-mounted camera sensor, detects that 1 object is wearing glasses. In a preset association relationship, the positioning result matching the above object recognition results from the sensors includes: there is a target object in the vehicle, and the target object is located at the seat position where the object wearing glasses that is detected by the vehicle-mounted camera is located. It should be noted that the setting mode of the preset association relationship is not limited to the above examples, for example, by increasing the types of the sensors or subdividing the recognition results from the sensors. Those skilled in the art can also make other changes under the inspiration of the technical essence of the disclosure, and the changes should be included in the scope of protection of the disclosure as long as their achievable functions and effects are the same or similar to the disclosure.

In the above target object positioning method, the association relationship between the object recognition results from the plurality of sensors and the positioning result is established, which solution can provide an improved accuracy of target object recognition and positioning than the use of a single sensor for target object recognition, and can provide the positioning result more directly and quickly than the solution in which the positioning accuracy of target object positioning is improved by increasing the complexity in a positioning algorithm for a single sensor. Accordingly, a desired screen projection object of a user can be more accurately determined based on the positioning result.

In a possible implementation, each of the plurality of sensors is set with a corresponding priority; the positioning result includes unrecognizable, and the obtaining object recognition results corresponding to a plurality of sensors in a vehicle includes:
obtaining an object recognition result from a corresponding first-priority sensor; and
after the determining, based on a preset association relationship between object recognition results and a positioning result, a positioning result matching the object recognition result data, the method further includes:
   when the recognition result indicates unrecognizable, obtaining an object recognition result from a corresponding second-priority sensor;
   merging the object recognition result from the corresponding first-priority sensor and the object recognition result from the corresponding second-priority sensor, to obtain a merged object recognition result; and
   determining, based on a preset association relationship between object recognition results and a positioning result, a positioning result matching the merged object recognition result.

Specifically, a priority may be set for each sensor, and an object recognition result from a higher-priority sensor is used first. In an exemplary embodiment, a priority may be determined for a sensor depending on the complexity in an object recognition result calculation algorithm and the complexity in interaction with an object. For example, a lower complexity in the object recognition result calculation algorithm or a lower complexity in interaction with the object indicates that a higher priority is set for the sensor. For example, the proximity sensor in the extended reality glasses obtains an object recognition result without the need to perform complicated calculations or interaction with the object, and therefore, a higher priority can be set for the proximity sensor. For another example, an in-vehicle microphone sensor determines the position of the target object with the need to interact with a user via voice, and therefore, a lower priority can be set for the sensor.

In the embodiments of the disclosure, the object recognition result with the first priority is used preferentially over the object recognition result with the second priority. In an exemplary embodiment, the object recognition result from the corresponding first-priority sensor is obtained, for example, the object recognition result from the proximity sensor of the extended reality glasses is obtained. The object recognition result includes: 2 or more objects are wearing the extended reality glasses. The object recognition result from the seat sensor includes: 2 or more objects are sitting in seats. When the number of objects in the recognition results from the two sensors is not equal, the positioning result cannot be provided by relying solely on the two sensors. In this case, the object recognition result from the corresponding second-priority sensor is obtained. For example, the object recognition result from the vehicle-mounted camera includes: 1 object is wearing glasses. The above object recognition result from the corresponding first-priority sensor and the above object recognition result from the corresponding second-priority sensor are merged to obtain a merged object recognition result. In the preset association relationship, the positioning result matching the merged object recognition result includes: there is 1 target object, and the position of the target object is the position of the object wearing glasses that is detected by the vehicle-mounted camera.

It should be noted that the priority in the embodiments of the disclosure is not limited to two levels of priority, but may also be three or more levels of priority. In an exemplary embodiment, for example, the object recognition result from the corresponding first-priority sensor includes: the object recognition result from the proximity sensor of the extended reality glasses includes: 1 object is wearing the extended reality glasses; and the object recognition result from the seat sensor includes: 2 or more objects are sitting in seats. According to the object recognition result corresponding to the first priority, the positioning result cannot be provided from the preset association relationship. In this case, it is necessary to further obtain the object recognition result from the corresponding second-priority sensor, for example: the object recognition result from the vehicle-mounted camera includes: 2 or more objects are wearing glasses. In this case, according to the object recognition result corresponding to the first priority and the object recognition result corresponding to the second priority, the positioning result still cannot be provided from the preset association relationship. Then, it is necessary to further obtain an object recognition result from a corresponding third-priority sensor, for example, to obtain an object recognition result from a microphone sensor, such as by sending a voice to the user to request the target object to reply to the voice, so as to determine the position of the target object through sound source localization.

In the embodiments of the disclosure, the priorities are set for the sensors and the object recognition results from the high-priority sensors are used first, such that the number of complicated object recognition result calculations can be reduced, and accurate positioning of the target object when it is not noticeable to the object can be implemented, thereby improving the use experience of the object.

In a possible implementation, the respectively obtaining object recognition results corresponding to a plurality of sensors in a vehicle includes:
respectively obtaining collected data corresponding to the plurality of sensors in the vehicle; and
processing the collected data according to an object recognition algorithm matching each of the plurality of sensors, to obtain a corresponding object recognition result.

Specifically, the collected data corresponding to the plurality of sensors in the vehicle is obtained. For example, a sensor of the extended reality device may include an infrared sensor, a radar sensor, etc., and the sensor uses the collected data to calculate, through a preset object recognition algorithm, whether an object is wearing the extended reality device. For another example, collected data of the vehicle-mounted camera includes image data, which is used to recognize an object in an image that is wearing glasses thought an object recognition algorithm, such as an image segmentation algorithm. Certainly, the above data may also be used to directly recognize an object wearing the extended reality glasses through some more computationally complicated object recognition algorithms, but these algorithms are time-consuming and are not included in the research scope of the solution. In other embodiments, for example, the seat sensor obtains, through a corresponding object recognition algorithm (pressure sensing), whether there is an object in a corresponding seat. It should be noted that the types of the preset sensors are not limited to the above examples, and correspondingly, the object recognition algorithms for the sensor object recognition results may also be different. Those skilled in the art can also make other changes under the inspiration of the technical essence of the disclosure, and the changes should be included in the scope of protection of the disclosure as long as their achievable functions and effects are the same or similar to the disclosure. In an exemplary embodiment, the object recognition result from each of the sensors may also be obtained by other sub-controllers, which may then transmit the object recognition result directly to the vehicle controller.

In the above embodiment, the object recognition results are obtained by processing the collected data according to the object recognition algorithms matching the sensors. Some of the object recognition results may also be used for other functions, which improves the utilization rate of the object recognition results.

The preset association relationship further includes an association relationship between the object recognition results and a positioning rule; and the determining, based on a preset association relationship between object recognition results and a positioning result, a positioning result matching the object recognition results includes:
determining, based on a preset association relationship between object recognition results and a positioning rule, a positioning rule matching the object recognition results; and
determining a positioning result based on the object recognition results and the positioning rule.

Specifically, the preset association relationship between the object recognition results and the positioning result may include the preset association relationship between the object recognition results and the positioning result, and the preset association relationship between the object recognition results and the positioning rule. In some complicated cases, the preset association relationship may not directly provide the positioning result. In this case, the positioning rule matching the object recognition results may be determined through the preset association relationship between the object recognition results and the positioning rule. In an exemplary embodiment, for example, the object recognition result from a proximity sensor of an augmented reality device includes: 1 object is wearing augmented reality glasses; the object recognition result from the seat sensor includes: 2 or more objects are sitting in seats; and the object recognition result from the vehicle-mounted camera includes: 2 or more objects are wearing glasses. In this case, because it is impossible to distinguish which of the two or more objects wearing glasses is wearing the augmented reality glasses, it is not yet possible to determine in which seat the target object is located. Through the positioning rule provided in the preset association relationship, for example, a voice prompt is sent to the target object: "Is the above interactive operation issued by the target object?", and when the target object replies with "Yes" or "No", a specific seat position of the target object may be determined through a preset sound source localization algorithm.

In the above embodiment, the preset association relationship between the object recognition results and the positioning rule may be added in complicated application scenarios, to accurately recognize and position the target object.

In a possible implementation, the method further includes:
when the positioning result includes the presence of a target object in the vehicle, in response to an interactive operation of the target object, displaying, on the extended reality sensor, a response picture matching the interactive operation.

Specifically, after a target object and a specific seat position of the target object are recognized, if the target object issues, to the vehicle, an interactive operation, for example, of playing a video, the vehicle controller displays the recognized content on the extended reality device of the target object. In another exemplary embodiment, when a plurality of target objects are recognized, for example, a target object A and a target object B respectively issue an interactive operation to the vehicle, the target object A performing a first interactive operation with the vehicle controller, and the target object B performing a second interactive operation with the vehicle controller, the vehicle controller displays, based on specific contents for the first interactive operation, a corresponding response picture on the extended reality device of the target object A; and the vehicle controller displays, based on specific contents for the second interactive operation, a corresponding response picture on the extended reality device of the target object B.

In the above embodiment, the position of the target object is determined, and when the target object performs an interactive operation with the vehicle, the corresponding response picture is displayed on the extended reality device, rather than on the vehicle display screen, which is more in line with the use requirements of the user.

In a possible implementation, the positioning result further includes absence of a target object in the vehicle; and the method further includes:
when the positioning result includes the absence of a target object in the vehicle, in response to an interactive operation of an in-vehicle object, displaying, on a display screen of the vehicle, a response picture matching the interactive operation.

Specifically, the positioning result may further include the absence of a target object in the vehicle. For example: the object recognition result from the extended reality device includes: 0 object is using the extended reality device; the object recognition result from the seat sensor includes: 1 object is sitting in a seat. In the preset association relationship, the positioning result matching the object recognition results includes that 0 object is wearing the extended reality device, that is, there is no target object. In this case, when the interactive operation of the in-vehicle object is received, the response picture matching the interactive operation is displayed on the display screen of the vehicle.

In the above embodiment, it is determined, according to the preset association relationship, whether there is a target object in the vehicle, and when there is no target object in the vehicle, the response picture matching the interactive operation is displayed on the display screen of the vehicle, which is more in line with the use requirements of the user.

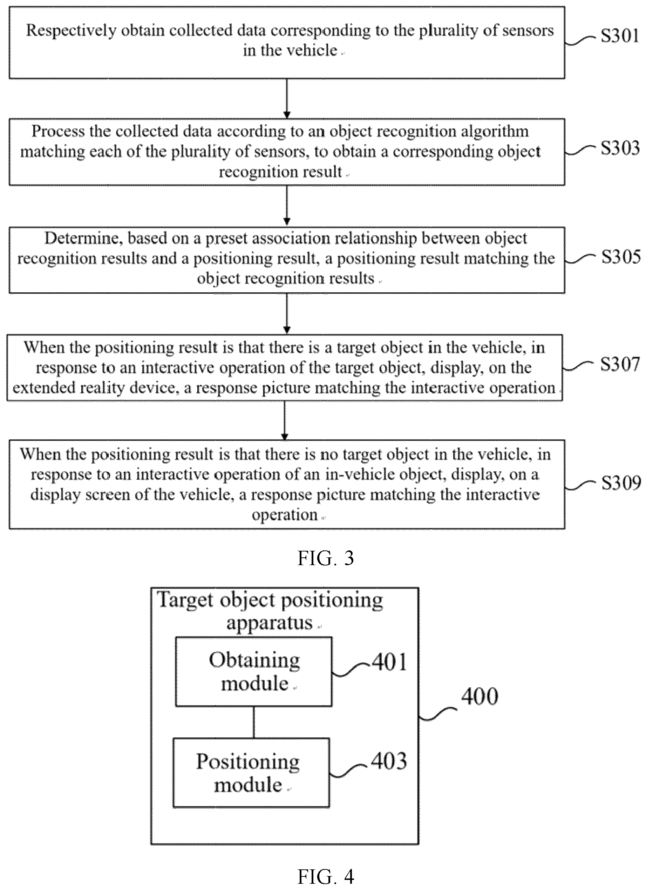

FIG. 3 is a second schematic flowchart of a target object positioning method according to another embodiment. Referring to FIG. 3, the method includes the following steps.

Step S301: Respectively obtain collected data corresponding to a plurality of sensors in a vehicle.

Step S303: Process the collected data according to an object recognition algorithm matching each of the plurality of sensors, to obtain a corresponding object recognition result.

Specifically, the collected data corresponding to the plurality of sensors in the vehicle is obtained. For example, a sensor of the extended reality device may include an infrared sensor, a radar sensor, etc., and the sensor uses the collected data to calculate, through a preset object recognition algorithm, whether an object is wearing the extended reality device. For another example, collected data of the vehicle-mounted camera includes image data, which is used to recognize an object in an image that is wearing glasses thought an object recognition algorithm, such as an image segmentation algorithm. In other embodiments, for example, the seat sensor obtains, through a corresponding object recognition algorithm (pressure sensing), whether there is an object in a corresponding seat.

Step S305: Determine, based on a preset association relationship between object recognition results and a positioning result, a positioning result matching the object recognition results.

In an exemplary embodiment, the positioning result includes the presence of the target object in the vehicle and the seat position of the target object. In an exemplary embodiment, a proximity sensor of the extended reality glasses detects that an object is using the extended reality glasses, and therefore, the object recognition result from the extended reality glasses includes: 1 object is using the extended reality glasses. Another sensor, such as a seat sensor, detects that an object is sitting in a seat, and therefore, the object recognition result from the seat sensor includes: 1 object is sitting in a seat. In a preset association relationship, the positioning result matching the above object recognition results from the sensors includes: there is a target object in the vehicle, and the target object is located at the position detected by the seat sensor. In another exemplary embodiment, the positioning result includes the absence of a target object in the vehicle. For example: the object recognition result from the extended reality device includes: 0 object is using the extended reality device; and the object recognition result from the seat sensor includes: 1 object is sitting in a seat. In the preset association relationship, the positioning result matching the object recognition results includes that 0 object is wearing the extended reality device, that is, there is no target object.

Step S307: When the positioning result is that there is a target object in the vehicle, in response to an interactive operation of the target object, display, on the extended reality device, a response picture matching the interactive operation.

Specifically, after a target object and a specific seat position of the target object are recognized, if the target object issues, to the vehicle, an interactive operation, for example, of playing a video, the vehicle controller displays the recognized content on the extended reality device of the target object.

Step S309: When the positioning result is that there is no target object in the vehicle, in response to an interactive operation of an in-vehicle object, display, on a display screen of the vehicle, a response picture matching the interactive operation.

It is determined, according to the preset association relationship, whether there is a target object in the vehicle, and when there is no target object in the vehicle, the response picture matching the interactive operation is displayed on the display screen of the vehicle, which is more in line with the use requirements of the user.

In a possible implementation, Table 1 provides a preset association relationship between object recognition results corresponding to a variety of sensors and a positioning result, as shown in Table 1.

| Serial number | Seat sensor (Seat occupancy number) | OMS detection result (Number of objects that wears glasses) | XR glasses proximity sensor (Number of objects wearing glasses) | Sound source localization (In-vehicle location area of sound source of interactive user) | Positioning result-Number of target objects | Positioning result-Wearing position |
|---|---|---|---|---|---|---|
| 1 | 0 | / | 0 | / | 0 | |
| 2 | 0 | / | 1 | / | 0 | |
| 3 | 1 | / | 0 | / | 0 | |
| 4 | 1 | / | 1 | / | 1 | Seat occupancy output |
| 5 | 2+ | / | 0 | / | 0 | |
| 6 | 2+ | 1 | 0 | / | 0 | |
| 7 | 2+ | 1 | 1 | / | 1 | OMS output |
| 8 | 2+ | 1 | 2+ | 1 | 1 | OMS output |
| 9 | 2+ | 2+ | 0 | / | 0 | |
| 10 | 2+ | 2+ | 1 | 1 | 1 | OMS and sound source localization output |
| 11 | 2+ | 2+ | 2+ | 2+ | 2+ | OMS and sound source localization output |

Referring to Table 1, for the serial number 1, when the object recognition result from the XR glasses (extended reality glasses) is 0 and the object recognition result from the seat sensor is 0, the positioning result is that there is no target object. For the serial number 2, when the object recognition result from the XR glasses is 1 and the object recognition result from the seat sensor is 0, the positioning result is that there is no target object, and in this case, the recognition result from the XR glasses may be a false trigger. For the serial number 3, when the object recognition result from the XR glasses is 0 and the object recognition result from the seat sensor is 1, the positioning result is that there is no target object. For the serial number 4, when the object recognition result from the XR glasses is 1 and the object recognition result from the seat sensor is 1, the positioning result is that there is 1 target object, and the position of the target object matches the seat sensor. For the serial number 5, when the object recognition result from the XR glasses is 0 and the object recognition result from the seat sensor is 2, the positioning result is that there is no target object. For the serial number 6, when the object recognition result from the XR glasses is 0, the object recognition result from the seat sensor is 2 or more, and the object recognition result from the OMS sensor (the vehicle-mounted camera) is 1, the positioning result is that there is no target object. For the serial number 7, when the object recognition result from the XR glasses is 1, the object recognition result from the seat sensor is 2 or more, and the object recognition result from the OMS sensor is 1, the positioning result is that there is a target object, and the position of the target object is the same as the position of the object that is detected by the OMS sensor. For the serial number 8, when the object recognition result from the XR glasses is 2 or more, the positioning recognition result from the seat sensor is 2 or more, and the object recognition result from the OMS sensor is 1, the positioning result is that there is a target object, and the position of the target object is the same as the position of the object that is detected by the OMS sensor. For the serial number 9, when the object recognition result from the XR glasses is 0, the positioning recognition result from the seat sensor is 2 or more, and the object recognition result from the OMS sensor is 2 or more, the positioning result is that there is no target object. For the serial number 10, when the object recognition result from the XR glasses is 1, the positioning recognition result from the seat sensor is 2 or more, the object recognition result from the XR glasses is 2 or more, and the object recognition result from the sound source localization sensor is 1, the positioning result is that there is 1 target object, and the position of the target object is the position of a located sound source. For the serial number 11, when the object recognition result from the XR glasses is 2 or more, the positioning recognition result from the seat sensor is 2 or more, the object recognition result from the OMS sensor is 2 or more, and the object recognition result from the sound source localization sensor is 2 or more, which is relatively complicated, a corresponding positioning rule is set and further positioning of the target object is performed according to the positioning rule.

It should be understood that although the steps in the flowcharts involved in the above embodiments are shown in sequence as indicated by the arrows, these steps are not necessarily executed in the order indicated by the arrows. Unless explicitly stated herein, there is no strict order restriction on the execution of these steps, and these steps can be executed in other orders. Moreover, at least some of the steps in the flowcharts involved in the above embodiments may include a plurality of steps or stages. These steps or stages are not necessarily executed at the same time, but may be executed at different times. The execution order of these steps or stages is not necessarily sequential, but they may be performed in turn or alternately with other steps or at least some of the steps or stages in other steps.

Based on the same inventive concept, an embodiment of the disclosure further provides a target object positioning apparatus for implementing the target object positioning method mentioned above. The solution to the problem provided by the apparatus is similar to the solution described in the above method. Therefore, for the specific definitions in one or more target object positioning apparatus embodiments provided below, reference may be made to the above definitions of the target object positioning method, and details are not described herein again.

In one embodiment, as shown in FIG. 4, a target object positioning apparatus is provided. The apparatus 400 includes:
an obtaining module 401 configured to respectively obtain object recognition results corresponding to a plurality of sensors in a vehicle; and
a positioning module 403 configured to determine, based on a preset association relationship between object recognition results and a positioning result, a positioning result matching the object recognition results. The positioning result includes presence of a target object in the vehicle and a seat position of the target object; and the target object includes an object wearing an extended reality device.

In a possible implementation, each of the plurality of sensors is set with a corresponding priority; the positioning result includes unrecognizable, and the obtaining module includes:
a first obtaining sub-module configured to obtain an object recognition result from a corresponding first-priority sensor; and
a second obtaining sub-module configured to, when the recognition result indicates unrecognizable, obtain an object recognition result from a corresponding second-priority sensor; and
the positioning module further includes:
   a merging sub-module configured to merge the object recognition result from the corresponding first-priority sensor and the object recognition result from the corresponding second-priority sensor, to obtain a merged object recognition result; and
   a first determination sub-module configured to determine, based on a preset association relationship between object recognition results and a positioning result, a positioning result matching the merged object recognition result.

In a possible implementation, the obtaining module includes:
a third obtaining sub-module configured to respectively obtain collected data corresponding to the plurality of sensors in the vehicle; and
a processing sub-module configured to process the collected data according to an object recognition algorithm matching each of the plurality of sensors, to obtain a corresponding object recognition result.

In a possible implementation, the preset association relationship further includes an association relationship between the object recognition results and a positioning rule; and the positioning module includes:
a second determination sub-module configured to determine, based on a preset association relationship between object recognition results and a positioning rule, a positioning rule matching the object recognition results; and
a third determination sub-module configured to determine a positioning result based on the object recognition results and the positioning rule.

In a possible implementation, the apparatus further includes:
a first display module configured to, when the positioning result is that there is a target object in the vehicle, in response to an interactive operation of the target object, display, on the extended reality device, a response picture matching the interactive operation.

In a possible implementation, the positioning result further includes absence of a target object in the vehicle; and the apparatus further includes:
a second display module configured to, when the positioning result is that there is no target object in the vehicle, in response to an interactive operation of an in-vehicle object, display, on a display screen of the vehicle, a response picture matching the interactive operation.

In a possible implementation, the sensor includes at least one of the following:
an extended reality sensor, a seat sensor, an image sensor, and a sound sensor.

All or some of the modules in the above target object positioning apparatus can be implemented by software, hardware, and a combination thereof. Each of the modules described above may be embedded in or independent of a processor of a computer device in the form of hardware, or may be stored in a memory of the computer device in the form of software, so that the processor can call and execute the operations corresponding to the modules described above.

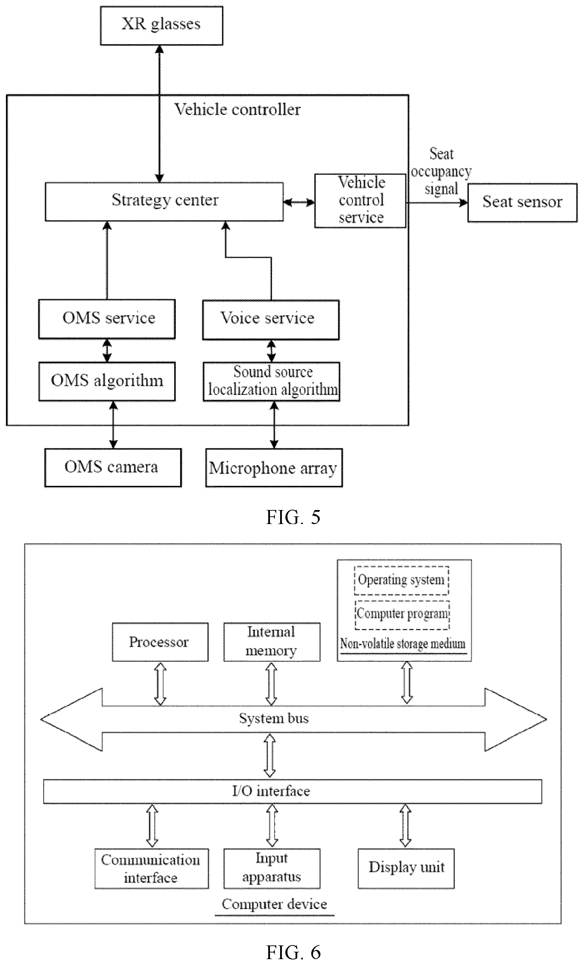

FIG. 5 is a diagram of an internal structure of a vehicle controller according to one embodiment. Referring to FIG. 5, in XR glasses as an extended reality device, a proximity sensor transmits an object recognition result to the vehicle controller. A seat sensor transmits an object recognition result therefrom to a strategy center through a vehicle control service, where the object recognition result from the seat sensor may also provide data for the vehicle control service. An OMS camera (a vehicle-mounted camera) captures in-vehicle image data, obtains an object recognition result through an OMS algorithm (an object recognition algorithm), and then transmits the object recognition result therefrom to the strategy center through an OMS service, where the object recognition result from the OMS may also provide the object recognition result to the OMS service for other purposes. A microphone array collects sound data, determines the location of a speaker through a sound source localization algorithm, and then sends an object recognition result therefrom to the strategy center through a voice service. The strategy center stores a preset association relationship between the object recognition results from the sensors and a positioning result. The strategy center determines, based on the preset association relationship between the object recognition results and the positioning result, a positioning result matching the object recognition results. The positioning result includes presence of a target object in a vehicle and a seat position of the target object; or may include absence of the target object in the vehicle.

In one embodiment, a computer device is provided. The computer device may be a terminal, such as a vehicle. A diagram of an internal structure of the computer device may be as shown in FIG. 6. The computer device includes a processor, a memory, a communication interface, a display screen, and an input apparatus that are connected through a system bus. The processor of the computer device is configured to provide computing and control capabilities. The memory of the computer device includes a non-volatile storage medium and an internal memory. The non-volatile storage medium stores an operating system and a computer program. The internal memory provides an environment for the operation of the operating system and the computer program in non-volatile storage medium. The communication interface of the computer device is used to communicate with an external terminal in a wired or wireless manner, and the wireless manner may be implemented by WIFI, a mobile cellular network, NFC (near-field communication) or other technologies. When the computer program is executed by the processor, a target object positioning method is implemented. The display screen of the computer device may be a liquid crystal display screen or an electronic ink display screen. The input apparatus of the computer device may be a touch layer covering the display screen, or may be a button, trackball or touchpad arranged on a housing of the computer device, or may be an external keyboard, touchpad or mouse, etc.

Those skilled in the art may understand that the structure shown in FIG. 6 is only a block diagram of a partial structure related to the solution of the disclosure, and does not constitute a limitation on the computer device to which the solution of the disclosure is applied. A specific computer device may include more or fewer components than shown, or have some components combined, or have a different arrangement of components.

Those of ordinary skill in the art may understand that implementation of all or some of the procedures of the embodiment method described above could be accomplished by a computer program instructing relevant hardware. The computer program may be stored in a non-volatile computer-readable storage medium. When the computer program is executed, the procedures of the above method embodiments may be executed. Any reference to the memory, the database or other media used in the embodiments provided in the disclosure may include at least one of non-volatile and volatile memories. The non-volatile memory may include a read-only memory (ROM), a magnetic tape, a floppy disk, a flash memory, an optical memory, a high-density embedded non-volatile memory, a resistive random access memory (ReRAM), a magnetoresistive random access memory (MRAM), a ferroelectric random access memory (FRAM), a phase change memory (PCM), a graphene memory, etc. The volatile memory may include a random access memory (RAM), an external cache memory, etc. As an illustration and not a limitation, RAM may be in various forms, such as a static random access memory (SRAM) or a dynamic random access memory (DRAM). The database involved in the various embodiments provided in the disclosure may include at least one of a relational database and a non-relational database. The non-relational database may include a blockchain-based distributed database, etc., but is not limited thereto. The processor involved in the various embodiments provided in the disclosure may be a general-purpose processor, a central processing unit, a graphics processor, a digital signal processor, a programmable logic device, a quantum computing-based data processing logic device, etc., but is not limited thereto.

The technical features of the above embodiments may be combined in any manner, and in order to simplify the description, not all possible combinations of the technical features of the above embodiments are described. However, as long as there is no conflict between the combinations of these technical features, they should be considered to be within the scope of the description in the disclosure.

The above embodiments merely illustrate several implementations of the disclosure and are described relatively specifically and in detail, but should not be construed as limiting the patent scope of the disclosure. It should be noted that several variations and improvements may also be made by those of ordinary skill in the art without departing from the concept of the disclosure, and should fall within the scope of protection of the disclosure. Therefore, the scope of protection of the disclosure shall be subject to the appended claims.

## Claims

1. A target object positioning method, which is applied to a vehicle controller, the method comprising:
respectively obtaining object recognition results corresponding to a plurality of sensors in a vehicle; and
determining, based on a preset association relationship between object recognition results and a positioning result, a positioning result matching the object recognition results, wherein the positioning result comprises presence of a target object in the vehicle and a seat position of the target object; and the target object comprises an object wearing an extended reality device.

2. The method according to claim 1, wherein each of the plurality of sensors is set with a corresponding priority; the positioning result comprises unrecognizable, and the obtaining object recognition results corresponding to a plurality of sensors in a vehicle comprises:
obtaining an object recognition result from a corresponding first-priority sensor; and
after the determining, based on a preset association relationship between object recognition results and a positioning result, a positioning result matching the object recognition result data, the method further comprises:
when the recognition result indicates unrecognizable, obtaining an object recognition result from a corresponding second-priority sensor;
merging the object recognition result from the corresponding first-priority sensor and the object recognition result from the corresponding second-priority sensor, to obtain a merged object recognition result; and
determining, based on a preset association relationship between object recognition results and a positioning result, a positioning result matching the merged object recognition result.

3. The method according to claim 1, wherein the respectively obtaining object recognition results corresponding to a plurality of sensors in a vehicle comprises:
respectively obtaining collected data corresponding to the plurality of sensors in the vehicle; and
processing the collected data according to an object recognition algorithm matching each of the plurality of sensors, to obtain a corresponding object recognition result.

4. The method according to claim 1, wherein the preset association relationship further comprises an association relationship between the object recognition results and a positioning rule; and the determining, based on a preset association relationship between object recognition results and a positioning result, a positioning result matching the object recognition results comprises:
determining, based on a preset association relationship between object recognition results and a positioning rule, a positioning rule matching the object recognition results; and
determining a positioning result based on the object recognition results and the positioning rule.

5. The method according to claim 1, wherein the method further comprises:
when the positioning result is that there is a target object in the vehicle, in response to an interactive operation of the target object, displaying, on the extended reality device, a response picture matching the interactive operation.

6. The method according to claim 1, wherein the positioning result further comprises absence of a target object in the vehicle; and the method further comprises:
when the positioning result is absence of a target object in the vehicle, in response to an interactive operation of an in-vehicle object, displaying, on a display screen of the vehicle, a response picture matching the interactive operation.

7. The method according to any one of claims 1 to 6, wherein the sensor comprises at least one of the following:
an extended reality sensor, a seat sensor, an image sensor, and a sound sensor.

8. A target object positioning apparatus, comprising:
an obtaining module configured to respectively obtain object recognition results corresponding to a plurality of sensors in a vehicle; and
a positioning module configured to determine, based on a preset association relationship between object recognition results and a positioning result, a positioning result matching the object recognition results, wherein the positioning result comprises presence of a target object in the vehicle and a seat position of the target object; and the target object comprises an object wearing an extended reality device.

9. The apparatus according to claim 8, wherein each of the plurality of sensors is set with a corresponding priority; the positioning result comprises unrecognizable, and the obtaining module comprises:
a first obtaining sub-module configured to obtain an object recognition result from a corresponding first-priority sensor; and
a second obtaining sub-module configured to, when the recognition result indicates unrecognizable, obtain an object recognition result from a corresponding second-priority sensor; and
the positioning module further comprises:
a merging sub-module configured to merge the object recognition result from the corresponding first-priority sensor and the object recognition result from the corresponding second-priority sensor, to obtain a merged object recognition result; and
a first determination sub-module configured to determine, based on a preset association relationship between object recognition results and a positioning result, a positioning result matching the merged object recognition result.

10. The apparatus according to claim 8, wherein the obtaining module comprises:
a third obtaining sub-module configured to respectively obtain collected data corresponding to the plurality of sensors in the vehicle; and
a processing sub-module configured to process the collected data according to an object recognition algorithm matching each of the plurality of sensors, to obtain a corresponding object recognition result.

11. The apparatus according to claim 8, wherein the preset association relationship further comprises an association relationship between the object recognition results and a positioning rule; and the positioning module comprises:
a second determination sub-module configured to determine, based on a preset association relationship between object recognition results and a positioning rule, a positioning rule matching the object recognition results; and
a third determination sub-module configured to determine a positioning result based on the object recognition results and the positioning rule.

12. The apparatus according to claim 8, wherein the apparatus further comprises:
a first display module configured to, when the positioning result is that there is a target object in the vehicle, in response to an interactive operation of the target object, display, on the extended reality device, a response picture matching the interactive operation.

13. The apparatus according to claim 8, wherein the positioning result further comprises absence of a target object in the vehicle; and the apparatus further comprises:
a second display module configured to, when the positioning result is that there is no target object in the vehicle, in response to an interactive operation of an in-vehicle object, display, on a display screen of the vehicle, a response picture matching the interactive operation.

14. The apparatus according to any one of claims 8 to 13, wherein the sensor comprises at least one of the following:
an extended reality sensor, a seat sensor, an image sensor, and a sound sensor.

15. A computer device, comprising a memory and a processor, the memory storing a computer program, wherein when the computer program is executed by the processor, the steps of a target object positioning method according to any one of claims 1 to 7 are implemented.

16. A computer-readable storage medium having a computer program stored thereon, wherein when the computer program is executed by a processor, the steps of a target object positioning method according to any one of claims 1 to 7 are implemented.

17. A computer program product, comprising a computer program, wherein when the computer program is executed by a processor, the steps of a target object positioning method according to any one of claims 1 to 7 are implemented.
